# EUROPEAN PATENT SPECIFICATION

(11) **EP 2 693 816 B1**
(45) Date of publication and mention of the grant of the patent: **17.06.2020**
(21) Application number: 12763164.6
(22) Date of filing: 23.03.2012
(51) Int. Cl.: H04W 52/54, H04L 29/08, H04L 29/10, H04L 1/16, H04L 1/18, H04L 5/00

(54) **METHOD AND DEVICE FOR USE IN FRAME ACKNOWLEDGEMENT**
VERFAHREN UND VORRICHTUNG ZUR VERWENDUNG IN EINER RAHMENQUITTIERUNG
PROCÉDÉ ET DISPOSITIF POUR LA TRANSMISSION D'ACCUSÉS DE RÉCEPTION DE TRAMES

(30) Priority: 31.03.2011 CN 201110081288; 19.05.2011 CN 201110130194; 06.07.2011 CN 201110189230; 08.02.2012 CN 201210027919; 02.03.2012 CN 201210053116
(43) Date of publication of application: 05.02.2014
(73) Proprietor: Beijing Nufront Mobile Multimedia Technology Co., Ltd., Haidian District, Beijing 100084 (CN)
(72) Inventor: BAO, Dongshan, Beijing 100084 (CN); ZHOU, Yubao, Beijing 100084 (CN); YAO, Huijuan, Beijing 100084 (CN); YU, Xiaoyan, Beijing 100084 (CN); LIU, Shenfa, Beijing 100084 (CN); XIE, Xiaoqiang, Beijing 100084 (CN); YAN, Desheng, Beijing 100084 (CN); YANG, Zhizuo, Beijing 100084 (CN)
(74) Representative: AWA Sweden AB
(86) International application number: PCT/CN2012/072895
(87) International publication number: WO 2012/130094

(56) References cited:
- CN-A- 1 886 667
- CN-A- 101 534 142
- CN-A- 101 663 590
- CN-A- 101 809 923
- US-A- 5 528 605
- US-A1- 2004 223 506
- US-A1- 2005 111 452
- US-A1- 2006 195 629

## Description

### CROSS-REFERENCE TO RELATED APPLICATION

This application claims the priority of a Chinese patent application No. 201110081288.6 filed on March 31, 2011 and titled "COMMUNICATION METHOD".

This application claims the priority of a Chinese patent application No. 201110130194.3 filed on May 19, 2011 and titled "COMMUNICATION SYSTEM".

This application claims the priority of a Chinese patent application No. 201110189230.3 filed on July 6, 2011 and titled "METHOD AND DEVICE FOR RETRANSMISSION".

This application claims the priority of a Chinese patent application No. 201210027919.0 filed on February 8, 2012 and titled "METHOD AND DEVICE FOR RETRANSMISSION".

This application claims the priority of a Chinese patent application No. 201210053116.2 filed on March 2, 2012 and titled "METHOD AND DEVICE FOR FRAME ACKNOWLEDGEMENT".

### FIELD OF THE INVENTION

This Invention belongs to the field of wireless communication, especially related to the method and device for the frame acknowledgement.

### BACKGROUND OF THE INVENTION

Over the recent years, wireless network technology include the wireless LAN technique WiFi that is based on the 802.11 standard, the Bluetooth system that is based on the 802.15 standard, the Femto technique that is directed to indoor applications and derived from the mobile communication system, etc.

The 802.11-based WiFi technique is currently the most widely used wireless network transmission technology. It is principally applied to wireless local area network environment, application scenarios with room predominate, may also be applied to an outdoor environment. 802.11 system evolves into 802.11a and 802.11g based on OFDM technology form initial 802.11b CDMA-based transmission mechanism. Although, in the latest IEEE 802.11n-2009 standard, enabling 802.11n physical peak rate attainable 600Mbps by introducing multi-antenna (MIMO) technology, but typically MAC(Media Access Control) layer throughput only reaches to the maximum of 300Mbps. So for conventional WLAN systems, MAC layer design of a single-user access network based on CSMA/CA(Carrier Sense Multiple Access with Collision Avoidance) is bottleneck of network performance. Thus, although existing Wi-Fi techniques provide user with cheap access way to some degree, but is hard to accommodate current and future rapid development of high rate multimedia traffic demands.

Femto technique based on 3GPP standard is a kind of new technology for indoor coverage evolved from mobile communication system, Femto technique based on 3G system employs CDMA transmission scheme, LTE or WiMAX system-oriented Femto techniques employ OFDM transmission scheme. This multiple access mechanism by time, frequency, codeword allocated for different users mutually orthogonal access resource contention, it is substantially different from competition-based CSMA/CA access. However Femto techniques derive from mobile communication system oriented 3G/LTE/WiMAX system. Since 3G/LTE/WiMAX system primarily apply to wide area coverage mobile communication scenario, system characteristics for short-range wireless communication scenario is not optimized. Meanwhile, strict requirement of synchronization in complicated upper layer protocol design and PHY layer based 3G/LTE/WiMAX, Results in equipment cost cannot be cheap as 802.11, that is also main reason why Femto technique have not been widely used at present.

Known methods for transmitting acknowledgements are disclosed in US2005111452, US5528605, US2006195629, and US2004223506.

With increasingly rapid development of multimedia service application requirements, in order to meet demand for wireless communication, There is a need to present a more suitable implementation.

### SUMMARY OF THE INVENTION

The technical problem which needs to solve in this Invention is to provide the method and device for frame acknowledgement, thus efficiently guarantee the successful transmission of data.

The invention is defined and limited by the scope of appended claims. In the following description, any embodiments referred to and not falling within the scope of the appended claims, are merely examples useful to the understanding of the invention.

### BRIEF DESCRIPTION OF THE DRAWING

Fig. 1 is a schematic flow chart of a method for frame acknowledgement according to a first embodiment of the invention;
Fig.2 is a detailed frame format for group acknowledgement frame according to a first embodiment of the invention;
Fig.3 is a detailed frame format for acknowledgement frame according to a second embodiment of the invention;
Fig.4 is a schematic flow chart of a method for retransmission according to a third embodiment of the invention;
Fig.5 is a detailed frame format for G-MPDU frame according to a third embodiment of the invention;
Fig.6 is a detailed frame format for G-MPDU subframes according to a third embodiment of the invention;
Fig.7 is a schematic flow chart of a method for retransmission according to a fourth embodiment of the invention;
Fig.8 is a detailed frame format for instant acknowledgement request frame according to a fourth embodiment of the invention;
Fig.9 is a schematic flow chart of a method for adopting associated mode to bear the instant acknowledgement request according to a fifth embodiment of the invention;
Fig. 10 is a schematic flow chart of a method for adopting associated mode to bear the delayed acknowledgement request according to a fifth embodiment of the invention;
Fig. 11 is a schematic flow chart of a method for receiving the delayed acknowledgement request adopted by associated mode according to a fifth embodiment of the invention;
Fig. 12 is a first structural representation of a device for frame acknowledgement according to a fifth embodiment of the invention;
Fig. 13 is a second structural representation of a device for frame acknowledgement according to a fifth embodiment of the invention;
Fig. 14 is a third structural representation of a device for frame acknowledgement according to a fifth embodiment of the invention;
Fig. 15 is a first structural representation of a device for frame acknowledgement according to a sixth embodiment of the invention;
Fig. 16 is a first structural representation of a device for frame acknowledgement according to a seventh embodiment of the invention

### DETAILED DESCRIPTION OF THE INVENTION

### The First Embodiment

The embodiment of this Invention provides a method for frame acknowledgement, which is not only suitable for the management frame but also appropriate for the data frame. After transmitting frame from transmitting terminal, the receiving terminal should return an acknowledgement to inform the transmitting terminal whether said data has been received successfully, then it could carry out an efficient monitoring of the data transmission.

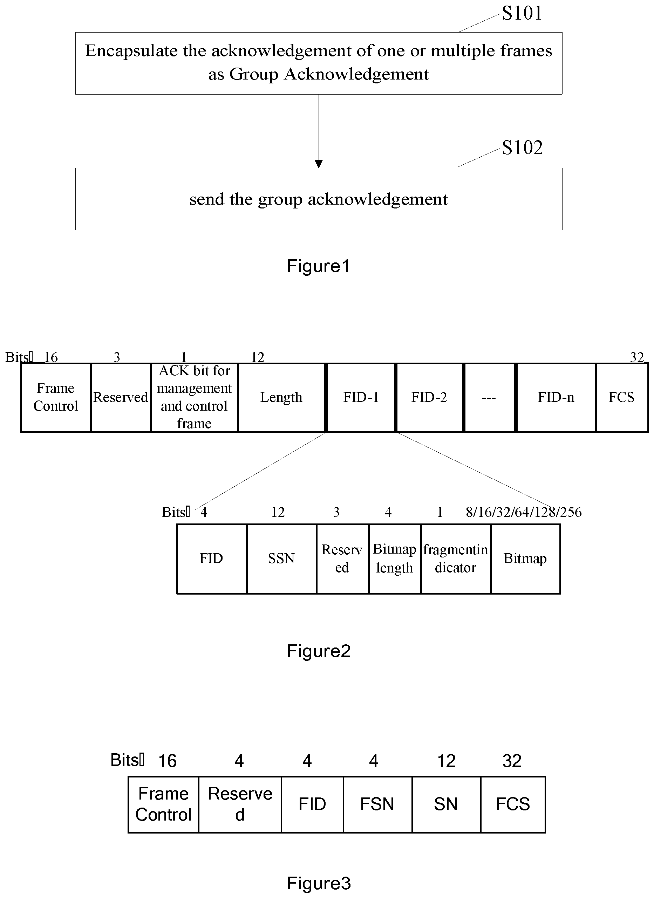

Refer to the figure 1, this figure shows a method for frame acknowledgement in one embodiment of this Invention. It includes the following steps:
Step S101: Encapsulating the acknowledgement of one or multiple frames as Group Acknowledgement (GroupAck);
Wherein, said acknowledgement of the frame is used to instruct the receiving state of the frame, which includes received and not received.

Step S102: transmitting said group acknowledgement.

The embodiment of this Invention provides a response mode of group acknowledgement , which is encapsulating multiple frames acknowledgements to one frame and transmitting. By adopting this response mode, it just needs to transmit once for the same frame header parameter and it saves transmitting resources efficiently; in addition, when it transmits on the physical channel, it can get multiple frames' acknowledgements while implement the synchronization of one frame (GroupAck), thus to save physical transmitting resources efficiently.

The wireless communication system supports various services and the transmission of data is in accordance with service flow. According to the types, the service flows can be divided into management service flow and data service flow. Wherein, The management service flow is consisted of one or multiple management frames while the date service flow is made up of one or multiple date frames. Besides, the date services can also be divided into more flows according to the detailed service type, such as service flow 1 (FID1), service flow 2 (FID2)... service flow n (FIDn).

Therefore, step S101 could further include (not shown in the figure):
Step S1011: Encapsulating the acknowledgement of one or multiple frames as Group Acknowledgement;
Step S1012: Encapsulating the acknowledgement of one or multiple service flows as Group Acknowledgement.

During encapsulating group acknowledgement, it also needs to encapsulate the identifiers of said one or multiple service flow and the identifiers of said one or multiple frames on said service flows, so that the receiving end can identify that the received group acknowledgement is the acknowledgement of which frames on which service flow.

Preferably, the embodiment of this invention proposes a scheme of successively bearing the acknowledgement of frames on the service flow by each bit symbol of bitmap and identifying the corresponding frame acknowledgement by the corresponding frame number of bit symbol of said bitmap. The receiving end will get which frame acknowledgement said bit bear according to the corresponding frame number in bit of said bitmap and get the content of the acknowledgement of the frame identified by said bit symbol number on the basis of the value of said bit symbol.

Preferably, to the continuous multiple frame acknowledgements of the service flow, it can identify the continuous and multiple frame acknowledgements of service flow according to the specific position frame among the continuous frames, such as the corresponding frame number of the first bit among bitmaps and the length of bitmaps, every bit in the bitmap corresponds to one frame acknowledgement.

Preferably, the length of said bitmap is not stable. The returned amount of frame acknowledgements is very flexible, which further improves the resource utilization rate.

Preferably, it also can set fragmentation instruction information to instruct what the corresponding bitmap bears are fragmentation frame acknowledgement or not. It means the embodiment of this invention supports the acknowledgement of both the non fragmentation frames and the fragmentation frames. At the same time, it can feedback the acknowledgement by blending fragmentation frames and non fragmentation frames. For example, it carries acknowledgement of FID1 and FIDO in the group acknowledgement and the frames of FIDO are non fragmentation frames while the frames of FID1 are fragmentation ones. Then the bitmap0 will be instructed as the non fragmentation frame acknowledgement of FIDO and the bitmap 1 will be instructed as the fragmentation frame acknowledgement of FID1. For Another example, it carries acknowledgement of FID1 and FIDO in the group acknowledgement. FIDO contains non fragmentation frames and fragmentation frames and the frame of the FID1 is non fragmentation. Then bitmap0 will beinstructed as the non fragmentation frame acknowledgement of FIDO, bitmap1 will be instructed as the fragmentation frame acknowledgement of FIDO and bitmap2 will be instructed as the fragmentation frame acknowledgement of FID1.

In order to state it more clearly, the embodiment of this invention also provides a specific form for group acknowledgement frame, as illustrated in figure 2. The group acknowledgement frame shown as the figure 2 contains frame header, frame body and frame check series message (FCS). The frame header includes frame control message such as frame types (management frame or data frame). Subtype (specific management frame types or specific data frame types), version information etc.; the frame body contains one or multiple FID message blocks. Said FID message blocks include service flow identification, serial number and bitmap, wherein, said bitmap is used to bear the continuous multiple frame acknowledgements. every bit in the bitmap corresponds to one frame acknowledgement. said serial numbers is used to instruct the corresponding frame number of the first bit in said bitmap.

Preferably, configuring each FID message block on the basis of the length of bitmap; said length of bitmap is not constant.

Preferably, assigning the field of bitmap length in said FID message block to instruct the length of bitmap.

Preferably, assigning the fragmentation instruction message in said FID message block to instruct what said bitmap bears is the acknowledgements of fragmentation frames or non fragmentation frames.

Preferably, assigning management control frame acknowledgement bit in the frame body. to acknowledge one received management control frame of no serial number.

Preferably, assigning a length field in the frame body. to instruct the total bytes length of all fields between said length field and FCS field. which is, the sum of length of all the FID message blocks.

The definition of parameters in the frame body can be referred to table 1:

**Table 1**

| Field | Length (Bit) | Description |
|---|---|---|
| Reservation | 3 | Default setting to 0. |
| Management Control Frame Acknowledgement bit | 1 | Instructing the acknowledgement of a received management control frame with no serial number. |
| Length | 12 | the total byte length of all fields between said length field and FCS field. |
| FID | 4 | Informing the transmitter that the FID message block is a GroupAck to one FID service flow. |
| SSN | 12 | Informing the transmitter the start numbers of Bitmap of FID message block. |
| | | Instructing the Bitmap length of each FID message block. |
| | | 0: 8 bits; |
| Bitmap Length | 4 | 1: 16 bits; |
| | | 2: 32 bits; |
| | | 3: 64 bits; |
| | | 4: 128 bits; |
| | | 5: 256 bits; |
| | | 6-15: reservation. |
| Reservation | 3 | Default setting to 0. |
| Fragmentation or not | 1 | setting to 1. Instructing the acknowledgement to the fragmentation data frame. each bit of Bitmap is making an acknowledgement to one fragmentation of one frame. |
| | | setting to 0. Instructing the acknowledgement to the non fragmentation data frame. each bit of Bitmap is making acknowledgement of one frame. |
| Bitmap | 8/16/32/64/128/256 | One bit of Bitmap instructing receiving successfully or not of some MPDU or fragmentation. If successful, setting to 1. otherwise setting to 0. The serial number of MPDU or fragmentation number is calculated according to the SSN and offset. |

Said frame acknowledgement is used to instruct the receiving state of frame, which includes received and not received.

Following is the description of the trigger of returning frame acknowledgement in the embodiment of this invention:

### 1. immediate acknowledgement:

Model: immediately returning the acknowledgement frame after receiving the immediate acknowledgement request.
wherein, said immediate acknowledgement request may be a request frame format which has been agreed on by both sides. Preferably, said immediate acknowledgement request could be the group acknowledgement request whichhas one or multiple service flow identification and one or multiple frame identification of each service flow attached, to instruct an immediate return of the specific frame acknowledge response of specific service flow. After receiving said group acknowledgement request, returning the specific frame acknowledge response of specific data flow immediately.

Said immediate acknowledgement request also may be an instructing bit which has been agreed on by both sides. For example, setting some field of data frame to be the instructing bit for immediate acknowledgement. When analyzing the data frame, if obtaining the immediate acknowledgement instruction in data frame, immediately returning the acknowledgement frame.

Preferably, setting said immediate acknowledgement instruction in the frame header of data frame.

Said immediately returning acknowledgement frame in the embodiment of this invention would return in the next time period.

In the embodiment of this invention, center access point (CAP) and station (STA) could be transmitting end and receiving end mutually. Wherein, CAP is for the entity which provides the access service for the accessed STA; STA has functional interfaces of media access control (MAC) and physical layer (PHY), it is a terminal equipment which could communicate with CAP. The transmitting end and the receiving end carry out the communication by the physical frame. Each physical frame period includes downlink period and uplink period successively: CAP transmits data to STA in the downlink period; STA transmits data to CAP in the uplink period. In the embodiment of this invention, when instructing the opposite terminal an immediate return acknowledgement frame; the instructed immediate return time, which is the next time period, is the uplink physical frame period corresponding to the downlink physical frame period or the downlink physical frame period corresponding to the uplink period of the last physical frame. Specifically, when the transmitting end is CAP and it transmits said data frame having the immediate acknowledgement instruction attached thereto in the downlink physical period of the frame, said immediate acknowledgement instruction is used to instruct STA a return frame acknowledge response in the uplink physical period of the frame; when the transmitting end is STA and it transmits the data frame having the immediate acknowledgement instruction attached thereto in the uplink physical period of the frame, said immediate acknowledgement instruction is used to instruct CAP a return frame acknowledge response in the downlink physical period of the next frame.

### 2. Delayed-ACK

Under the condition of not receiving the immediate acknowledgement requests, it can be thought it allows a delayed return frame acknowledge response of opposite end.

In the embodiment of this invention, the agreed instruction bit of both sides distinctly shows the delayed acknowledgement. For example, one field of the agreed data frame is the delayed acknowledgement instruction bit. The waiting interval of frame acknowledgement by using the delayed-ACK is determined by the transmitting end. It can be transmitted when it has free resource. If it obtains the delayed-ACK instruction from data frame during analyzing data frame, it will return the acknowledgement frame when it has free resource.

### The Second Embodiment

To the management control frame, the unicast management frame, which has no corresponding response frame, needs to acknowledge by using ACK or group acknowledgement (GroupAck). Otherwise, it will use corresponding response frame acknowledgement directly.

The embodiment of this invention also provides some management request frame and the corresponding response frame thereof, as shown in the Table 2. meanwhile, in another embodiment, it also canassign other management request frame and the corresponding response thereof according to the requirement. This invention doesn't do any limitation here.

**Table 2**

| **Request Frame** | **Corresponding Response Frame** |
|---|---|
| Radom Access Request Frame (RA_REQ) | Radom Access Response Frame (RA_RSP) |
| Terminal Basic Capability Negotiation Request (SBC_REQ) | Terminal Basic Capability Negotiation Response (SBC_RSP) |
| Uplink Dynamic Service Access Request (DSA_REQ) | Dynamic Service Access Response (DSA_RSP) |
| Uplink Dynamic Service Change Request (DSC_REQ) | Dynamic Service Change Response (DSC_RSP) |
| Uplink Dynamic Service Delete Request (DSD_REQ) | Dynamic Service Delete Response (DSD_RSP) |
| Group Acknowledgement Request Frame (GroupAckReq) | Group Acknowledgement Frame (GroupAck) |
| Sleep Request Frame (SLP_REQ) | Sleep Response Frame(SLP_RSP) |

All the non-broadcast management control frames (except the random access request response frame and independent resource request frame) need to transmit acknowledgement frame or implied acknowledgement. The implied acknowledgement means that the unicast management control frame, which has the corresponding response frame, can regard the response frame as the acknowledgement frame of this frame. The non-broadcast management control frame doesn't need to acknowledge immediately, the response frame just needs to response in the following allowed maximum physical frame number. If the response frame transmitted by CAP doesn't receive the acknowledgement frame of STA, it can transmit this response frame again before it reaches the default maximum retransmission times. When the retransmission times exceed said default maximum times, the transmitting end will abandon this frame.

Whether the data frame uses immediate acknowledgement or delayed acknowledge is determined by the transmitting end. The receiving end can instruct whether it needs the immediate acknowledgement or not according to the field of instruction frame acknowledgement mode in MAC header. The waiting interval of frame acknowledgement by using the immediate acknowledgement is a time period The waiting interval of frame acknowledgement by using the delayed acknowledgement is determined by the transmitting end.

If the acknowledgement mode is immediate acknowledgement and it doesn't receive the acknowledgement frame in the next time period, this data frame can be transmitted again before it reaches the default maximum retransmission times. If the retransmission times exceed said default maximum times, the transmitting end will abandon this frame. The next time period here said may be the uplink physical frame period corresponding to the downlink physical frame period or the downlink physical frame period corresponding to the last uplink physical frame period. That means when it transmits said data frame having the immediate acknowledgement instruction attached thereto during the downlink physical period of this frame, said immediate acknowledgement instruction is used to instruct a return frame acknowledge response in the uplink physical period of this frame; when it transmits said data frame having the immediate acknowledgement instruction attached thereto during the uplink physical period of this frame, said immediate acknowledgement instruction is used to instruct a return frame acknowledge response in the downlink physical period of this frame. When the MPDU retransmits, the serial number and the fragmentation number remain unchanged.

If the acknowledgement mode is delayed acknowledgement and it doesn't receive the acknowledgement frame in the waiting interval which is configured by the transmitting end, this data frame can be retransmitted before it reaches the default maximum retransmission times. When the retransmission times exceed said default maximum times, the transmitting end will abandon this frame.

There is no need for other frames to acknowledge for ACK frame and GroupAck frame.

To the data frame of fragmentation and non fragmentation, it can acknowledge by using either mode of ACK or GroupAck.

The embodiment of this invention also provides another frame acknowledgement mode (ACK frame). It is suitable for aiming at the single frame acknowledgment. In order to state more intuitively, the embodiment of this invention also provides a specific format of the acknowledgement frame, as shown in figure 3. The acknowledgement frame which is shown in figure 3 includes frame header, frame body and frame check series (FCS). The frame header contains frame control message such as frame type (management frame or data frame), subtype (detailed management frame types or detailed data frame types), and version message etc.; the frame body includes FID, fragmentation serial number (FSN), frame serial number (SN). Each parameter definition in frame body can refer to Table 3:

**Table 3**

| Field | Leng th(bit) | Description |
|---|---|---|
| Reser vation | 4 | Default setting to 0. |
| FID | 4 | Service flow identification. |
| FSN | 4 | It means this acknowledgement is a frame acknowledgement of fragmentation serial number FSN. If it doesn't adopt fragmentation, the setting of this field will be 0. |
| SN | 12 | It means this acknowledgement is a MPDU acknowledgement of SN. If the acknowledged is management control frame of none serial number, the SN will be set as 0. |

### The Third Embodiment

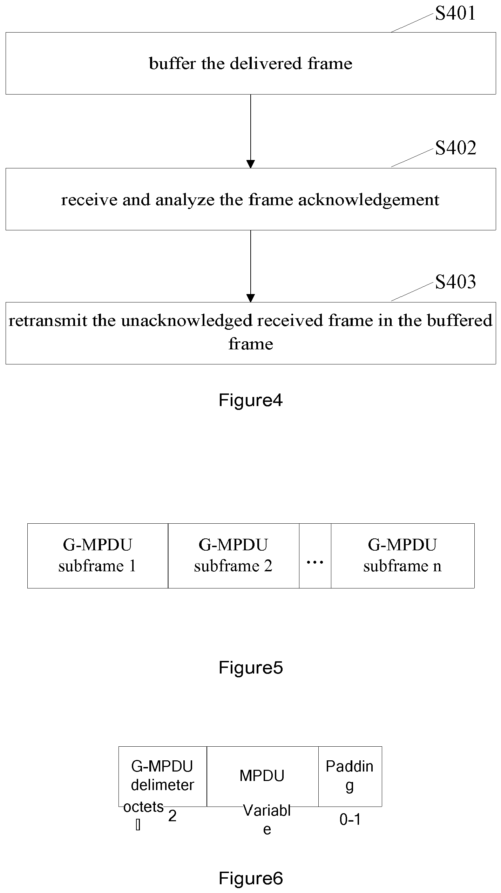

The embodiment of this invention provides a retransmission method, as shown in figure 4. It includes the following steps:
Step S401: caching the transmitted frame;
Step S402: receiving and analyzing the frame acknowledge response;
Step S403: retransmitting the cached unacknowledged received frame.

The retransmitted data of the retransmission method provided by the embodiment of this invention is maintained by transmitting end. During the retransmitting, it only retransmits the unacknowledged received frame and it will not retransmit the received frame. Especially when it retransmits data according to the default window, it allows to not retransmit the acknowledged and received frame in the window. It saves transmission resource greatly.

Preferably, the acknowledged and received frame in the buffered frame can be deleted. So that it can save the local cache efficiently.

Preferably, it can encapsulate one or multiple continuous frames as group frame (G-MPDU) and transmit. As shown in figure 5, the G-MPDU is consisted of a series of G-MPDU subframes. As shown in figure 6, G-MPDU subframes contain G-MPDU delimiter, MPDU and probable stuffing bytes. Except for the last G-MPDU subframe, each G-MPDU subframe needs to add 0∼1 stuffing byte, making the length of each F-MPDU is the integral multiple of2 bytes. Said G-MPDU delimiter is used to localize the MPDU unit of G-MPDU. Encapsulate multiple frames together and transmit, when it transmits in physical channel it can obtain many frames during the synchronization of one frame (G-MPDU), then it can save the physical transmission resources efficiently.

The received frame acknowledge response in step S402 may be the group acknowledge response provided in the first embodiment or the single frame acknowledge response provided in the second embodiment.

### The Fourth Embodiment

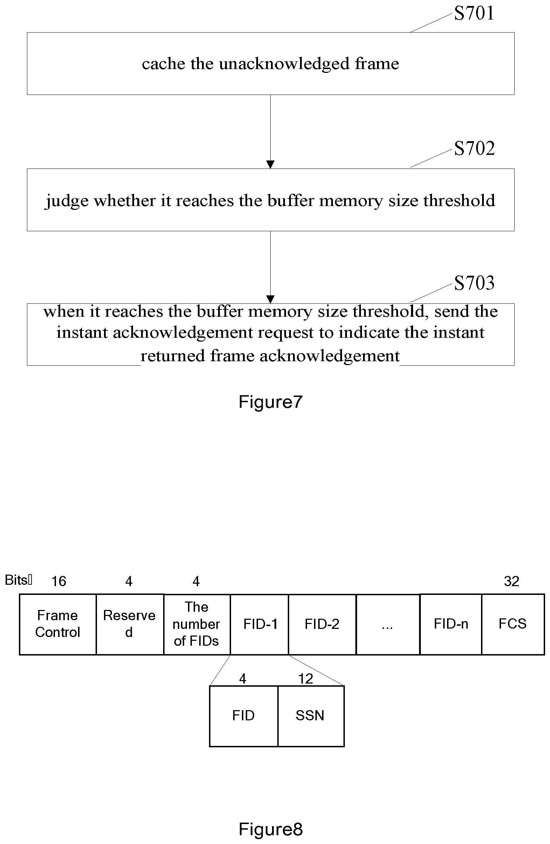

To the considering of caching capability and prevent the error caused by exceeding caching capability, the embodiment of this invention also provides a method of retransmission, which increases the monitoring of caching capability of this terminal. If it detects that the caching capability may have any overrunning risks, it will inform the opposite terminal to returnresponse immediately, which is specifically shown in figure 7 and it includes following steps:
Step S701: caching the frames that doesn't receive the acknowledge response;
Step S701: determining whether it reaches the threshold of buffer memory size;
Step S701: transmitting the immediate acknowledgement request when it reaches the buffer memory size threshold, to instruct an immediate return frame acknowledge response.

Preferably, said immediate acknowledgement request has one or multiple service flow identification, and one or multiple frame identification in each service flow attached thereto, to instruct an immediate return acknowledge response of the appointed frame in the appointed data flow.

Preferably, said immediate acknowledgement request can carry the serial number of the first frame which needs to return the acknowledgement in each service flow. It is used to instruct the opposite end a return frame acknowledge response which starts from said first frame in said service flow.

In order to explain it more intuitively, the embodiment of this invention also provides a specific frame format of the immediate acknowledgement request, as shown in figure 8. The immediate acknowledgement request which is shown in figure 8 includes frame header, frame body and frame check series (FCS). The frame header contains frame control message such as frame type (management frame or data frame), subtype (detailed management frame type or detailed data frame type), and version message etc.; frame body contains one or multiple FID message blocks. Each FID message block includes service flow identification FID and serial number. Said serial number means the first frame serial number which needs to return the acknowledgement in the service and it is used to instruct the opposite end a return acknowledge response from said first frame. It relates to the corresponding frame serial number of the first bit symbol in bitmap of group acknowledgement which is provided by the first embodiment. Each parameter definition of frame body can refer to Table 4:

**Table 4**

| Field | Lengt h(Bit) | Description |
|---|---|---|
| reser vation | 4 | default setting to 0. |
| FID Number | 4 | Instructing the contained FID message block numbers between this field and FCS. |
| FID | 4 | Requesting the receiving end carry out GroupAck to this FID service flow. |
| SSN | 12 | Informing the receiving end use this value as the start serial number of Bitmap during GroupAck. |

Preferably, the embodiment of this invention also provides another method to realize the immediate acknowledgement: by bearing the immediate acknowledgement instruction into data frames and transmitting it with data frame together, to transmit immediate acknowledgement request; said immediate acknowledgement instruction is used to instruct an immediate return frame acknowledge response.

Preferably, it can bear immediate acknowledgement instruction into the frame header of data frame.

Wherein, said immediate return frame acknowledge response is to return said group acknowledge response in the next time period. Said next time period means the uplink physical frame period corresponding to the downlink physical frame period or the downlink physical frame period corresponding to the last uplink physical frame period. That means when it transmits said data frames having the immediate acknowledgement instruction attached thereto in the downlink physical period of this frame, said immediate acknowledgement instruction is used to instruct the opposite end a return frame acknowledge response in the uplink physical period of this frame; when it transmits said data framed having the immediate acknowledgement instruction attached thereto in the uplink physical period of this frame, said immediate acknowledgement instruction is used to instruct the opposite end a return frame acknowledge response in the downlink physical period of this frame;

Preferably, the embodiment of this invention also can bear the delayed acknowledgement instruction in data frame and transmit with the data frame before reaching the threshold of the buffer memory size. Said delayed acknowledgement instruction is used to instruct that it allows the delayed return acknowledge response of all unacknowledged data frames in each service flow. When the opposite end is analyzing data frame, if it obtains the delayed acknowledgement instruction from data frame, it will return the acknowledge response of all unacknowledged frames in each service flow when it has free resources.

The embodiment of this invention also provides a option of frame acknowledgement transmitting opportunity. Center access point (CAP) and station (STA) can be transmitting end and receiving end mutually, specifically comprising:
1. If CAP transmits management control frame (needs to acknowledge) to STA, the CAP needs to reserve resource for acknowledgement frame when it assigns the uplink transmission resources and guarantees STA has chances to transmit acknowledgement frame successfully.
2. If CAP transmits G-MPDU to STA and instructs STA to carry out the immediate acknowledgement by the field used to indicate the frame acknowledgement mode, the CAP needs to reserve resources for GroupAck frame or ACK frame when it assigns the uplink transmission resources.
3. If CAP transmits aggregated data frame to STA and instructs to allow the delayed response of STA by the field used to instruct the frame acknowledgement mode, the STA can transmit GroupAck frame back when there is some surplus of uplink transmission resource. It also can transmit GroupAck back until it receives the information of immediate acknowledgement which is sent by CAP.
4. If STA transmits management control frame (needs to acknowledge) to CAP, the CAP will carry out the acknowledgement in the downlink physical period of next frame.
5. If STA transmits G-MPDU to CAP and instructs CAP to carry out the immediate acknowledgement by the field used to instruct the frame acknowledgement mode, the CAP will transmit GroupAck frame or ACK frame in the downlink physical period of next frame.
6. If STA transmits aggregated data frame to CAP and instructs to allow the delayed response of CAP by the field used to instruct the frame acknowledgement mode, the CAP can transmit GroupAck frame back when there is some surplus of downlink transmission resource. It also can transmit GroupAck back until it receives the information of immediate acknowledgement which is sent by STA.

### The Fifth Embodiment

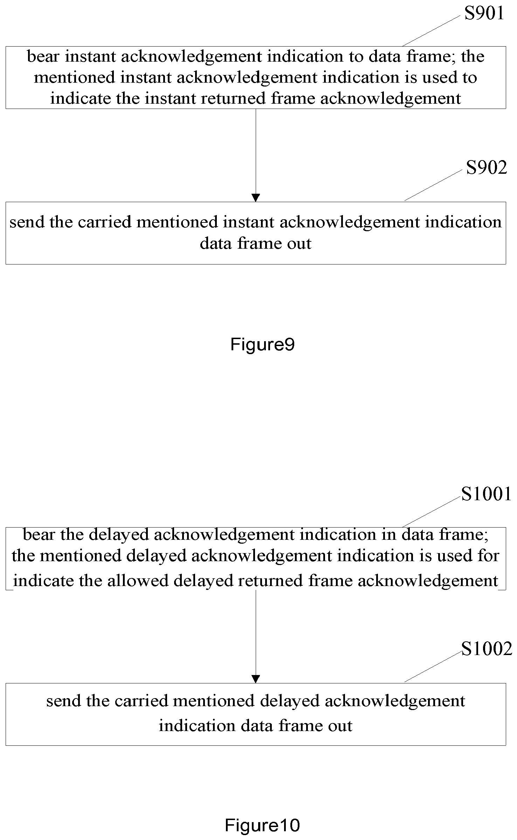

The embodiment of this invention provides a frame acknowledgement method. It adopts associated mode to bear the immediate acknowledgement request and requires immediate frame acknowledgement of opposite end, as shown in figure 9. comprising:
Step S901: bearing immediate acknowledgement instruction to data frame; said immediate acknowledgement instruction is for use in instructing an immediate return frame acknowledge response;
Step S902: transmitting the data frame having said immediate acknowledgement instruction attached thereto .

Preferably, both sides of receiving and transmitting can appoint one field of data frame as the immediate acknowledgement instruction bit. When transmitting data frame, it requests the opposite end to return the frame acknowledgement immediately by setting said immediate acknowledgement instruction bit. Preferably, it can set immediate acknowledgement instructing bit in the data frame header. When transmitting the immediate acknowledgement request, it can instruct the opposite end an immediate return frame acknowledge response by setting the immediate acknowledgement instruction bit in data frame header.

Preferably, said immediate return frame acknowledge response means to return said group acknowledge response in the next time period. Said next time period instructs the uplink physical frame period corresponding to the downlink physical frame period or the downlink physical frame period corresponding to the last uplink physical frame period. That means when it transmits said data frames having the immediate acknowledgement instruction attached thereto in the downlink physical period of this frame, said immediate acknowledgement instruction is used to instruct the opposite end a return frame acknowledge response in the uplink physical period of this frame; when it transmits said data frames having the immediate acknowledgement instruction attached thereto in the uplink physical period of this frame, said immediate acknowledgement instruction is used to instruct the opposite end a return frame acknowledge response in the downlink physical period of the next frame;

Preferably, said immediate acknowledgement instruction is used to instruct a return acknowledge response of all unacknowledged frames. So that the transmission efficiency can be improved and the unnecessary waste of bandwidth can be reduced.

To the transmitting opportunity of immediate acknowledgement requests, this invention designs to monitor the caching capacity. When it exceeds the capacity threshold, it will inform the opposite to feedback the frame acknowledge response immediately and to prevent the fault caused by exceeding caching threshold. specifically comprising:
Step 1: caching the frames that doesn't receive the acknowledgement;
Step 2: determining whether it reaches the caching capacity threshold;
Step 3: triggering the transmitting of immediate acknowledgement instruction before reaching the caching capacity threshold,.

The embodiment of this invention also provides a method of frame acknowledgement. It adopts associated mode to bear acknowledgement request and informs the opposite to return the frame acknowledgement. meanwhile it allows the delayed return of opposite end, as shown in figure 10. It includes the following steps:
Step S1001: bearing the delayed acknowledgement instruction into data frame; said delayed acknowledgement instruction is used to instruct the allowed delayed return frame acknowledge response;
Step S1002: transmitting the data frame having said delayed acknowledgement instruction attached thereto .

Preferably, both sides of receiving and transmitting can appoint one field of data frame as the delayed acknowledgement instruction bit. When transmitting data frame, it informs the opposite end the allowed delayed return frame acknowledge response by setting delayed acknowledgement instruction bit. Preferably, it can set delayed acknowledgement instruction bit in the data frame header. When transmitting the delayed acknowledgement request, it can instruct the opposite end a return frame acknowledge response and the allowed delayed return of the opposite end by setting the delayed acknowledgement instructing bit in data frame header.

Preferably, said delayed acknowledgement instruction is used to instruct a return acknowledge response of all unacknowledged frames. So that the transmission efficiency can be improved and the unnecessary waste of bandwidth can be reduced.

To the transmitting opportunity of delayed acknowledgement requests, this invention designs to monitor the caching capacity. When it doesn't exceed the capacity threshold, it means it will not exceed the capacity and make error. It is not required to return the frame acknowledge response immediately. Then it needs to guarantee the smooth execution of the task for opposite end. Therefore, transmit the delayed acknowledgement instruction and allow the opposite end a delayed return frame acknowledge response. The detailed steps are as following:
Step 1: caching the frames that don't receive the acknowledge response;
Step 2: determining whether it reaches the caching capacity threshold;
Step 3:triggering the transmitting of delayed acknowledgement instruction before reaching the caching capacity threshold.

The above two frame acknowledgement methods of this invention consider the priority of local processing and opposite end service assurance. It balances the priority of both sides and improves the whole performance of system; and it also adopts associated mode to carry out the instruction. It makes fully use of the present transmission resources and reduces the occupied transmission resources which are informed by the opposite end. At the same time, it is very easy to realize and it has a high economic value.

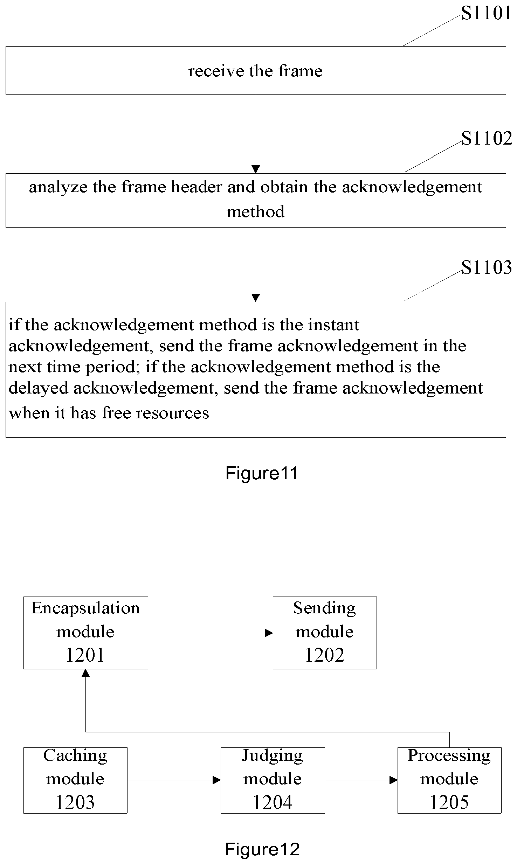

Accordingly, the embodiment of this invention also provides a method for frame acknowledgement. It adopts the frame acknowledgement request which sent by said associated mode in handling, as shown in figure 11. The steps include:
Step S1101: receiving the frame;
Step S1102: analyzing the frame header and obtaining the acknowledgement mode;
Step S1103: if the acknowledgement mode is immediate acknowledgement, transmitting the frame acknowledgement in the next time period; if the acknowledgement mode is delayed acknowledgement, transmitting the frame acknowledge response when it has free resources.

Wherein, when receiving frame in the downlink physical period of this frame and obtaining its acknowledgement mode is immediate acknowledgement, transmit the frame acknowledge response in the uplink physical period of this frame; when receiving frame in the uplink physical period of this frame and obtaining its acknowledgement mode is immediate acknowledgement, transmit the frame acknowledge response in the downlink physical period of the next frame.

Preferably, when one or multiple users receive the immediate acknowledgement instruction in the current time period, the users who received the instruction need to simultaneously transmit frame acknowledge response in the next time period.

In order to realize the above frame acknowledgement method which requires the opposite end to carry out the frame acknowledgement, the embodiment of this invention also provides a frame acknowledgement device, as shown in figure 12. It includes:

Encapsulating module 1201, used for bearing immediate acknowledgement instruction into a data frame; said immediate acknowledgement instruction is for use in instructing an immediate return frame acknowledge response;

Transmitting module 1202, used for transmitting the data frames having said immediate acknowledgement instruction attached thereto.

Preferably, said encapsulating module 1201 is used for bearing said immediate acknowledgement instruction into the frame header of data frame.

Preferably, said immediate return frame acknowledgement means to transmit said group acknowledgement in the next time period. Said next time period means the uplink physical frame period corresponding to the downlink physical frame period or the downlink physical frame period corresponding to the last uplink physical frame period.

That means when said transmitting module 1202 transmits said data frame having the immediate acknowledgement instruction attached thereto in the downlink physical period of this frame, said immediate acknowledgement instruction is for use in instructing a return frame acknowledgement in the uplink physical period of this frame. When said transmitting module 1202 transmits said data frame having the immediate acknowledgement instruction attached thereto in the uplink physical period of this frame, said immediate acknowledgement instruction is for use in instructing a return frame acknowledgement in the downlink physical period of next frame.

Preferably, said immediate acknowledgement instruction is used for instructing a return acknowledgements of all unacknowledged frame.

Preferably, it also includes:
Caching module 1203, used for caching the frames that don't receive the acknowledge response;
determining module 1204, used for determining whether it has reached caching capacity threshold or not;
Processing module 1205, used for triggering the transmitting of immediate acknowledgement instruction when it reaches caching capacity threshold.

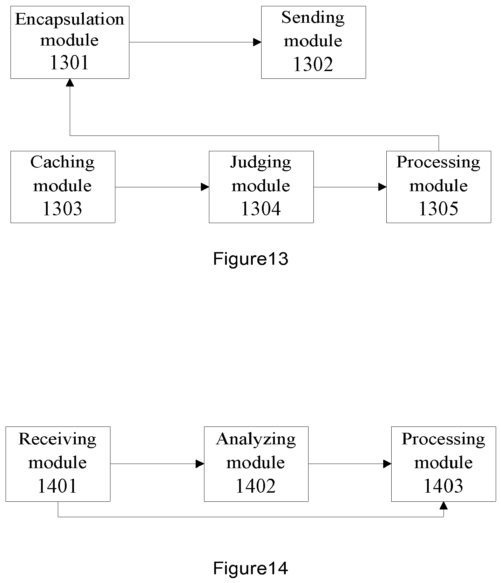

In order to realize the above frame acknowledgement method that informs the opposite end to allow the delayed frame acknowledgement, the embodiment of this invention also provides another frame acknowledgement device, as shown in figure 13. It includes:
Encapsulating module 1301, used for bearing delayed acknowledgement instruction into a data frame; said delayed acknowledgement instruction is used for instructing the allowed delayed return frame acknowledgement;
Transmitting module 1302, used for transmitting the data frame having said delayed acknowledgement instruction attached thereto.

Preferably, said encapsulating module 1301 is used for bearing said delayed acknowledgement instruction into the frame header of data frame.

Preferably, said delayed acknowledgement instruction is used for instructing a return acknowledge response of all unacknowledged frame.

Preferably, it also includes:
Caching module 1303, used for caching the frames that don't receive the acknowledge response;
determining module 1304, used for determining whether it has reached caching capacity threshold or not;
Processing module 1305, used for triggering the transmitting of delayed acknowledgement instruction when it reaches caching capacity threshold.

In order to realize the above frame acknowledgement method of immediate acknowledgement request which is sent by said associated mode, the embodiment of this invention also provides anotherdevice which is used for frame acknowledgement, as shown in figure 14. It includes:
Receiving module 1401, used for receiving frame;
Analyzing module 1402, used for analyzing the frame header and obtaining the acknowledgement mode;
Processing module 1403, used for carrying out frame acknowledge response according to the acknowledgment mode. When the acknowledgment mode is immediate acknowledgment, it transmits frame acknowledge response in the next time period; if the acknowledgment mode is delayed acknowledgment, it transmits frame acknowledge response when it has free resources.

Preferably, when the acknowledgement mode is immediate acknowledgement and said receiving module 1401 receives said frame in the downlink physical period of this frame, said processing module 1403 transmits the frame acknowledge response in the uplink physical period of this frame; if the acknowledgement mode is immediate acknowledgement and said receiving module 1401 receives said frame in the uplink physical period of this frame, said processing module 1403 transmits the frame acknowledge response in the downlink physical period of next frame.

Preferably, to one or multiple users, the received frame acknowledgement mode of whom is immediate acknowledgement in the present time period, said processing module 1403 simultaneously transmits the frame acknowledge response to said users in the next time period .

### The Sixth Embodiment

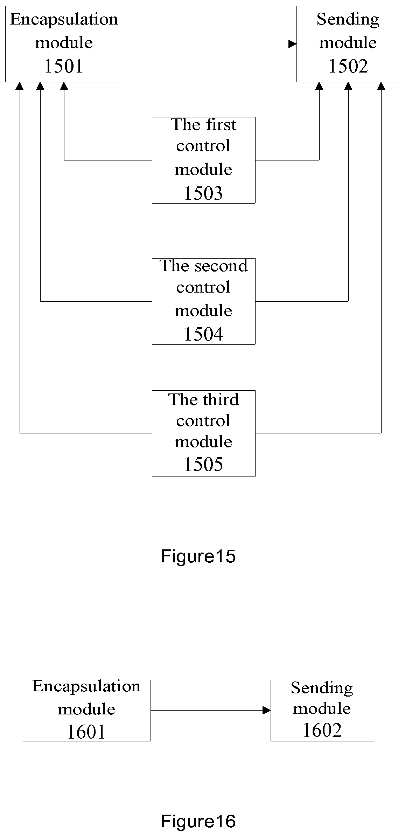

In order to realize the frame acknowledgement method in the embodiment of this invention, this invention also provides a frame acknowledgement device, as shown in figure 15. It includes:
Encapsulating module 1501, used for encapsulating one or multiple frame acknowledge response to group acknowledgement;
Transmitting module 1502, used for transmitting said group acknowledge response.

Preferably, said encapsulating module 1501 is used for encapsulating one or multiple frames acknowledge response in the same service flow to the service flow acknowledge response; encapsulating one or multiple service flow acknowledge response to group acknowledge response.

Preferably, said encapsulating module 1501 is used for encapsulating the frame header, frame body and FCS of group acknowledgement: setting one or multiple FID message blocks in frame body. Said service flow acknowledge response includes service flow identification, serial number and bitmap. Wherein, said bitmap is used for bearing continuous multiple frames acknowledgement. Each bit of bitmap correspond to one frame acknowledgement. Said serial number is used for instructing the corresponding frame number of the first bit of said bitmap.

Preferably, said encapsulation module 1501 is used for setting each FID message block according to the length of bitmap; the length of said bitmap is not constant.

Preferably, said encapsulation module 1501 also assigns the field of the bitmap's length in said FID message block. It is used for instructing the length of bitmap.

Preferably, said encapsulation module 1501 also sets fragmentation instructing message in said FID message block. It is used for instructing the frame acknowledge response bore by said bitmap is fragmentation or non fragmentation.

Preferably, said encapsulation module 1501 also sets management control frame acknowledgement bit in group acknowledgement. It is used for acknowledging the received management control frame without serial number.

Preferably, said encapsulation module 1501 also sets length field in frame body. It is used for instructing the sum of length of all the FID message blocks.

Preferably, said frame acknowledge response is used for instructing the receiving state of the appointed frame. It includes received and not received.

Preferably, it also includes:
The first control module 1504, used for receiving the immediate acknowledgement request, controlling said encapsulating module 1501 to encapsulate the group acknowledge response and controlling said transmitting module 1502 to transmit the encapsulated group acknowledge response.

Preferably, said immediate acknowledgement request having one or multiple service flow identifications and one or multiple frame identifications attached thereto in each service flow; said first control module 1504 controls said encapsulating module 1501 to encapsulate the appointed frame acknowledge response in the appointed data flow to group acknowledge response according to the immediate acknowledgement request.

Preferably, said immediate transmitting means to return said group acknowledge response in the next time period. Said next time period means the uplink physical frame period corresponding to the downlink physical frame period or the downlink physical frame period corresponding to the last uplink physical frame period. That means, when receiving said immediate acknowledgement request in the downlink physical period of this frame, said first control module 1504 controls said transmitting module 1502 to transmit the encapsulated group acknowledge response in the uplink physical period of this frame; when receiving said immediate acknowledgement request in the uplink physical period of this frame, said first control module 1504 controls said transmitting module 1502 to transmit the encapsulated group acknowledge response in the downlink physical period of next frame.

Preferably, it also includes:
The second control module 1504, used for receiving the data frame having the immediate acknowledgement instruction attached thereto, controlling said encapsulating module 1501 to encapsulate the group acknowledge response according to the immediate acknowledgement instruction, and controlling said transmitting module 1502 to transmit the encapsulated group acknowledge response immediately.

Preferably, said second module 1504, used for controlling said encapsulation module 1501 to encapsulate the acknowledge response of all unacknowledged frames in each service flow as the group acknowledge response and controlling said transmitting module 1502 to transmit the encapsulated group acknowledge response immediately.

Preferably, said second control module 1504 obtains said immediate acknowledgement instruction by analyzing the frame header of data frame.

Preferably, said immediate transmitting means to return said group acknowledgement in the next time period. Said next time period means the uplink physical frame period corresponding to the downlink physical frame period or the downlink physical frame period corresponding to the lastuplink physical frame period. That means, when receiving the data frames having said immediate acknowledgement instruction attached thereto in the downlink physical period of this frame, said second control module 1504 controls said transmitting module 1502 to transmit the encapsulated group acknowledge response in the uplink physical period of this frame; when receiving the data frames having said immediate acknowledgement instruction attached thereto in the uplink physical period of this frame, said second control module 1504 controls said transmitting module 1502 to transmit the encapsulated group acknowledge response in the downlink physical period of next frame.

Preferably, it also includes:
The third control module 1505, used for receiving the data frame which carries delayed acknowledgement instruction, controlling said encapsulating module 1501 to encapsulate the group acknowledge response when it has free resources according to the delayed acknowledgement instruction, and controlling said transmitting module 1502 to transmit the encapsulated group acknowledgeresponse.

### The Seventh Embodiment

In order to realize the frame acknowledgement method in the embodiment of this invention, this invention also provides another frame acknowledgement device, as shown in figure 16. It includes:
Encapsulating module 1601, used for generating group acknowledgement request. Said group acknowledgement request carries one or multiple service flow identifications and the frame identification which is needed to acknowledge in each service flow;
Transmitting module 1602, used for transmitting said group acknowledgement.

Preferably, the encapsulating module 1601 is used for encapsulating group acknowledgement, and generating said group acknowledgement request;
Said group acknowledgement request includes frame header, frame body and FCS. Said frame body includes one or multiple FID message blocks. Each FID message block contains service flow identification FID and serial number. It treats the responded first frame serial number in said service flow as the acknowledged frame identification and instructs to return the frame acknowledgement from said first frame.

Preferably, said encapsulating module 1601 also sets the field of FID number in group acknowledgement request. It is used for instructing the FID message blocks number in frame body.

Preferably, said group acknowledgement request is used for instructing an immediate return acknowledge response of the appointed frame of the appointed data flow.

Preferably, said immediate return group acknowledge response is to return said group acknowledge response in the next time period;
Said next time period means the uplink physical frame period corresponding to the downlink physical frame period or the downlink physical frame period corresponding to the last uplink physical frame period. That means when said transmitting module 1602 transmits the group acknowledgement request in the downlink physical period of this frame, said immediate acknowledgement instruction is for use in instructing a return frame acknowledgement in the uplink physical period of this frame. When said transmitting module 1602 transmits the group acknowledgment request in the uplink physical period of this frame, said immediate acknowledgement instruction is for use in instructing a return frame acknowledgement in the downlink physical period of next frame.

## Claims

1. A method for frame acknowledgement, the method comprising:
encapsulating an immediate acknowledgement instruction into a data frame; said immediate acknowledgement instruction being used for instructing a return frame acknowledge response in the next time period;
transmitting the data frame having said immediate acknowledgement instruction attached thereto;
wherein each physical frame includes a downlink physical period and an uplink physical period successively, and
wherein, when transmitting said data frame having the immediate acknowledgement instruction attached thereto in the downlink physical period of a physical frame,
said immediate acknowledgement instruction is used for instructing a return frame acknowledge response in the uplink physical period of the physical frame; and
when transmitting said data frame having the immediate acknowledgement instruction attached thereto in the uplink physical period of a physical frame,
said immediate acknowledgement instruction is used for instructing a return frame acknowledge response in the downlink physical period of the next physical frame.

2. The method of claim 1, comprising encapsulating said immediate acknowledgement instruction into a frame header of said data frame.

3. A device for frame acknowledgement, the device comprising:
encapsulation module, used for encapsulating an immediate acknowledgement instruction into a data frame; said immediate acknowledgement instruction being used for instructing a return frame acknowledge response in the next time period;
sending module, used for transmitting the data frame having said immediate acknowledgement instruction attached thereto;
wherein each physical frame includes a downlink physical period and an uplink physical period successively, and
wherein, when transmitting said data frame having the immediate acknowledgement instruction attached thereto in the downlink physical period of a physical frame,
said immediate acknowledgement instruction is used for instructing a return frame acknowledge response in the uplink physical period of the physical frame; and when transmitting said data frame having the immediate acknowledgement instruction attached thereto in the uplink physical period of a physical frame, said immediate acknowledgement instruction is used for instructing a return frame acknowledge response in the downlink physical period of the next physical frame.

4. The device of claim 3, comprising encapsulating said immediate acknowledgement instruction into a frame header of said data frame.

5. The device of any one of claims 3 or 4, further comprising:
caching module, used for caching unacknowledged frames;
judging module, used for judging whether the amount of the unacknowledged frames has reached a caching capacity threshold;
processing module, used for triggering transmitting the data frame having said immediate acknowledgement instruction attached thereto when the amount of the unacknowledged frames reaches the caching capacity threshold.

6. A method for frame acknowledgement, the method comprising:
encapsulating a delayed acknowledgement instruction into a data frame; said delayed acknowledgement instruction is used for instructing a return frame acknowledge response delayed until a receiving end has free resources;
transmitting the data frame having said delayed acknowledgement instruction attached thereto to the receiving end;
wherein each physical frame includes a downlink physical period and an uplink physical period successively, and
wherein, when transmitting said data frame having the delayed acknowledgement instruction attached thereto in the downlink physical period of a physical frame,
said delayed acknowledgement instruction is used for instructing a return frame acknowledge response in the uplink physical period of a physical frame delayed until the receiving end has free resources; and
when transmitting said data frame having the delayed acknowledgement instruction attached thereto in the uplink physical period of a physical frame,
said delayed acknowledgement instruction is used for instructing a return frame acknowledge response in the downlink physical period of a physical frame delayed until the receiving end has free resources.

7. A device for frame acknowledgement, the device comprising:
encapsulation module, used for encapsulating a delayed acknowledgement instruction into a data frame; said delayed acknowledgement instruction being used for instructing a return frame acknowledge response delayed until a receiving end has free resources;
sending module, used for transmitting the data frame having said delayed acknowledgement instruction attached thereto to the receiving end;
wherein each physical frame includes a downlink physical period and an uplink physical period successively, and
wherein, when transmitting said data frame having said delayed acknowledgement instruction attached thereto in the downlink physical period of a physical frame,
said delayed acknowledgement instruction is used for instructing a return frame acknowledge response in the uplink physical period of a physical frame delayed until the receiving end has free resources; and
when transmitting said data frame having said delayed acknowledgement instruction attached thereto in the uplink physical period of a physical frame,
said delayed acknowledgement instruction is used for instructing a return frame acknowledge response in the downlink physical period of a physical frame delayed until the receiving end has free resources.

## Patentansprüche

1. Verfahren für eine Rahmenquittierung, wobei das Verfahren umfasst:
Verkapseln einer unverzüglichen Quittierungsanweisung in einen Datenrahmen; wobei die unverzügliche Quittierungsanweisung zum Anweisen einer Rückrahmen-Quittierungsantwort in der nächsten Zeitperiode verwendet wird;
Übertragen des Datenrahmens mit der daran angehängten unverzüglichen Quittierungsanweisung;
wobei jeder physische Rahmen sukzessive eine physische Downlink-Periode und eine physische Uplink-Periode enthält und
wobei die unverzügliche Quittierungsanweisung beim Übertragen des Datenrahmens mit der daran angehängten unverzüglichen Quittierungsanweisung in der physischen Downlink-Periode eines physischen Rahmens zum Anweisen einer Rückrahmen-Quittierungsantwort in der physischen Uplink-Periode des physischen Rahmens verwendet wird; und
wobei die unverzügliche Quittierungsanweisung beim Übertragen des Datenrahmens mit der daran angehängten unverzüglichen Quittierungsanweisung in der physischen Uplink-Periode eines physischen Rahmen zum Anweisen einer Rückrahmen-Quittierungsantwort in der physischen Downlink-Periode des nächsten physischen Rahmens verwendet wird.

2. Verfahren gemäß Anspruch 1, umfassend das Verkapseln der unverzüglichen Quittierungsanweisung in einer Rahmen-Kopfzeile des Datenrahmens.

3. Vorrichtung für eine Rahmenquittierung, wobei die Vorrichtung umfasst:
ein Verkapselungsmodul, das zum Verkapseln einer unverzüglichen Quittierungsanweisung in einem Datenrahmen verwendet ist; wobei die unverzügliche Quittierungsanweisung zum Anweisen einer Rückrahmen-Quittierungsantwort in der nächsten Zeitperiode verwendet ist;
ein Sendemodul, das zum Übertragen des Datenrahmens mit der daran angehängten unverzüglichen Quittierungsanweisung verwendet ist;
wobei jeder physische Rahmen sukzessive eine physische Downlink-Periode und eine physische Uplink-Periode umfasst, und
wobei die unverzügliche Quittierungsanweisung beim Übertragen des Datenrahmens mit der daran angehängten unverzüglichen Quittierung in der physischen Downlink-Periode eines physischen Rahmens zum Anweisen einer Rückrahmen-Quittierungsantwort in der physischen Uplink-Periode des physischen Rahmens verwendet ist; und
die unverzügliche Quittierungsanweisung beim Übertragen des Datenrahmens mit der daran angehängten unverzüglichen Quittierungsanweisung in der physischen Uplink-Periode eines physischen Rahmens zum Anweisen einer Rückrahmen-Quittierungsantwort in der physischen Downlink-Periode des nächsten physischen Rahmens verwendet ist.

4. Vorrichtung nach Anspruch 3, umfassend das Verkapseln der unverzüglichen Quittierungsanweisung in eine Rahmenkopfzeile des Datenrahmens.

5. Vorrichtung nach irgendeinem der Ansprüche 3 oder 4, weiterhin umfassend:
ein Caching-Modul, das zum Cachen von nicht quittierten Rahmen verwendet ist;
ein Beurteilungs-Modul, das zum Beurteilen verwendet ist, ob die Menge der nicht quittierten Rahmen einen Caching-Kapazitätsschwellenwert erreicht hat;
ein Verarbeitungsmodul, das zum Auslösen des Übertragens des Datenrahmens mit der daran angehängten unverzüglichen Quittierungsanweisung verwendet ist, wenn die Menge der nicht quittierten Rahmen den Caching-Kapazitätsschwellenwert erreicht.

6. Verfahren für eine Rahmenquittierung, wobei das Verfahren umfasst:
Verkapseln einer verzögerten Quittierungsanweisung in einen Datenrahmen;
wobei die verzögerte Quittierungsanweisung zum Anweisen einer Rückrahmen-Quittierungsantwort verwendet wird, die verzögert wird, bis ein empfangendes Ende freie Ressourcen aufweist;
Übertragen des Datenrahmens mit der daran angehängten verzögerten Quittierungsanweisung an das empfangende Ende;
wobei jeder physische Rahmen sukzessive eine physische Downlink-Periode und eine physische Uplink-Periode enthält; und
wobei die verzögerte Quittierungsanweisung beim Übertragen des Datenrahmens mit der daran angehängten verzögerten Quittierungsanweisung in der physischen Downlink-Periode eines physischen Rahmens zum Anweisen einer Rückrahmen-Quittierungsantwort in der physischen Uplink-Periode eines physischen Rahmens verwendet wird, die verzögert wird, bis das empfangende Ende freie Ressourcen aufweist; und
die verzögerte Quittierungsanweisung beim Übertragen des Datenrahmens mit der daran angehängten Quittierungsanweisung in der physischen Uplink-Periode eines physischen Rahmens zum Anweisen einer Rückrahmen-Quittierungsantwort in der physischen Downlink-Periode eines physischen Rahmens verwendet wird, die verzögert wird, bis das empfangende Ende freie Ressourcen aufweist.

7. Vorrichtung für eine Rahmenquittierung, wobei die Vorrichtung umfasst:
ein Verkapselungsmodul, das zum Verkapseln einer verzögerten Quittierungsanweisung in einen Datenrahmen verwendet wird; wobei die verzögerte Quittierungsanweisung zum Anweisen einer Rückrahmen-Quittierungsantwort verwendet ist, die verzögert ist, bis ein empfangendes Ende freie Ressourcen aufweist;
Senden eines Moduls, das zum Übertragen des Datenrahmens mit der daran angehängten verzögerten Quittierungsanweisung an das empfangende Ende verwendet ist;
wobei jeder physische Rahmen sukzessive eine physische Downlink-Periode und eine physische Uplink-Periode enthält und
wobei die verzögerte Quittierungsanweisung beim Übertragen des Datenrahmens mit der daran angehängten verzögerten Quittierungsanweisung in der physischen Downlink-Periode eines physischen Rahmens zum Anweisen einer Rückrahmen-Quittierungsantwort in der physischen Periode eines physischen Rahmens verwendet ist, die verzögert ist, bis das empfangende Ende freie Ressourcen aufweist; und
die verzögerte Quittierungsanweisung beim Übertragen des Datenrahmens mit der daran angehängten verzögerten Quittierungsanweisung in der physischen Uplink-Periode eines physischen Rahmens zum Anweisen einer Rückrahmen-Quittierungsantwort in der physischen Downlink-Periode eines physischen Rahmens verwendet ist, bis das empfangende Ende freie Ressourcen aufweist.

## Revendications

1. Procédé d'accusé accusé de réception de trames, le procédé comprenant de :
encapsuler une instruction d'accusé de réception immédiat dans une trame de données; ladite instruction d'accusé de réception étant utilisée pour instruire une réponse d'accusé de réception de retour dans la période temporelle suivante;
transmettre la trame de données à laquelle est rattachée ladite instruction d'accusé de réception immédiat;
dans lequel chaque trame physique inclut une période physique de liaison descendante et une période physique de liaison montante successivement, et
dans lequel, lors de la transmission de ladite trame de données à laquelle est rattachée l'instruction d'accusé de réception immédiat dans la période physique de liaison descendante d'une trame physique, ladite instruction d'accusé de réception immédiat est utilisée pour instruire une réponse d'accusé de réception de trame de retour dans la période physique de liaison montante de la trame physique ; et
lors de ne la transmission de ladite trame de données à laquelle l'instruction d'accusé de réception immédiat est rattachée dans la période physique de liaison montante d'une trame physique, ladite instruction d'accusé de réception immédiat est utilisée pour instruire une réponse d'accusé de réception de trame de retour dans la période physique de liaison descendante de la trame physique suivante.

2. Procédé selon la revendication 1, comprenant d'encapsuler ladite instruction d'accusé de réception immédiat dans l'en-tête de trame de ladite trame de données.

3. Dispositif d'accusé de réception de trame, le dispositif comprenant :
un module d'encapsulation, utilisé pour encapsuler une instruction d'accusé de réception immédiate dans une trame de données;
ladite instruction d'accusé de réception immédiate étant utilisée pour instruire une réponse d'accusé de réception de trame de retour dans la période temporelle suivante;
un module d'envoi, utilisé pour transmettre la trame de données à laquelle est rattachée ladite instruction d'accusé de réception immédiat;
dans lequel chaque trame physique inclut une période physique de liaison descendante et une période physique de liaison montante successivement, et
dans lequel, lors de la transmission de ladite trame de données à laquelle l'instruction d'accusé de réception immédiate est rattachée dans la période physique de liaison descendante d'une trame physique,
ladite instruction en d'accusé de réception immédiate est utilisée pour instruire une réponse d'accusé de réception de trame de retour dans la période physique de liaison montante de la trame physique; et
lors de la transmission de ladite trame de données à laquelle est rattachée l'instruction d'accusé de réception immédiat dans la période physique de liaison montante d'une trame physique, ladite instruction d'accusé de réception immédiate est utilisée pour instruire une réponse d'accusé de réception de trame de retour dans la période physique de liaison descendante de la trame physique suivante.

4. Dispositif selon la revendication 3, comprenant d'encapsuler ladite instruction d'accusé de réception immédiat dans un en-tête de trame de ladite trame de données.

5. Dispositif selon une quelconque des revendications 3 ou 4, comprenant en outre :
un module d'antémémoire, utilisé pour placer en antémémoire des trames dont la réception n'a pas été accusée;
un module d'estimation, utilisé pour estimer si la quantité de trames dont la réception n'a pas été accusé a atteint un seuil de capacité d'antémémoire;
un module de traitement, utilisé pour déclencher la transmission de la trame de données à laquelle est rattachée ladite instruction d'accusé de réception immédiat lorsque la quantité des trames dont la réception n'a pas été accusée atteint le seuil de capacité d'antémémoire.

6. Procédé d'accusé de réception de trame, le procédé comprenant de :
encapsuler une instruction d'accusé de réception retardée dans une trame de données; ladite instruction d'accusé de réception retardée est utilisée pour instruire une réponse d'accusé de réception de trame de retour retardée jusqu'à ce qu'une extrémité de réception ait des ressources libres;
transmettre la trame de données à laquelle est rattachée ladite instruction d'accusé de réception retardée à l'extrémité de réception;
dans lequel chaque trame physique inclut une période physique de liaison descendante et une période physique de liaison montante successivement, et
dans lequel, lors de la transmission au de ladite trame de données à laquelle est rattachée l'instruction d'accusé de réception retardée dans la période physique de liaison descendante d'une trame physique, ladite instruction d'accusé de réception retardée est utilisée pour instruire une réponse d'accusé de réception de trame de retour dans la période physique de liaison montante d'une trame physique retardée jusqu'à ce que l'extrémité de réception ait des ressources libres ; et
lors de la transmission de ladite trame de données à laquelle est rattachée l'instruction d'accusé de réception retardée dans la période physique de liaison montante d'une trame physique, ladite instruction d'accusé de réception retardée est utilisée pour instruire une réponse d'accusé de réception de trame de retour dans la période physique de liaison descendante d'une trame physique retardée jusqu'à ce que l'extrémité de réception ait des ressources libres.

7. Dispositif d'accusé de réception de trame, le dispositif comprenant :
un module d'encapsulation, utilisé pour encapsuler une instruction d'accusé de réception retardée dans une trames de données;
ladite instruction d'accusé de réception retardée étant utilisée pour instruire une réponse d'accusé de réception de trame de retour retardée jusqu'à ce qu'une extrémité de réception ait des ressources libres;
un module d'envoi, utilisé pour transmettre la trame de données à laquelle est rattachée ladite instruction d'accusé de réception retardée à l'extrémité de réception;
dans lequel chaque trame physique inclut une période physique de liaison descendante et une période physique de liaison montante successivement, et
dans lequel, lorsque la transmission de la trames de données à laquelle est rattachée ladite instruction d'accusé de réception retardée dans la période physique de liaison descendante d'une trame physique,
ladite instruction d'accusé de réception retardée est utilisée pour instruire une réponse d'accusé de réception de trame de retour dans la période physique de liaison montante d'une trame physique retardée jusqu'à ce que l'extrémité de réception ait des ressources libres ; et
lors de la transmission de ladite trame de données à laquelle est rattachée ladite instruction d'accusé de réception retardée dans la période physique de liaison montante d'une trame physique, ladite instruction d'accusé de réception retardée est utilisée pour instruire une réponse d'accusé de réception de trame de retour dans la période physique de liaison descendante d'une trame physique retardée jusqu'à ce que l'extrémité de réception ait des ressources libres.
